(19)

**Europäisches Patentamt**

**European Patent Office**

**Office européen des brevets**

(11)　**EP 4 786 075 A1**

(12)　## EUROPEAN PATENT APPLICATION

(43) Date of publication:
　　**05.08.2026  Bulletin 2026/32**

(21) Application number: **25382058.3**

(22) Date of filing: **30.01.2025**

(51) International Patent Classification (IPC):
　　*B22F 10/28* (2021.01)　　　*B22F 10/36* (2021.01)
　　*B22F 10/38* (2021.01)　　　*B29C 64/153* (2017.01)
　　*B33Y 10/00* (2015.01)　　　*B33Y 50/02* (2015.01)
　　*B22F 10/366* (2021.01)　　*B22F 12/90* (2021.01)
　　*G01N 27/04* (2006.01)

(52) Cooperative Patent Classification (CPC):
　　**B22F 10/28; B22F 10/36; B22F 10/366;**
　　**B22F 10/38; B22F 12/90; B33Y 10/00; B33Y 50/02;**
　　**G01N 27/20;** B22F 2203/03

(84) Designated Contracting States:
　**AL AT BE BG CH CY CZ DE DK EE ES FI FR GB
　GR HR HU IE IS IT LI LT LU LV MC ME MK MT NL
　NO PL PT RO RS SE SI SK SM TR**
　Designated Extension States:
　**BA**
　Designated Validation States:
　**GE KH MA MD TN**

(71) Applicants:
　• **Fundació Eurecat
　　08290 Cerdanyola del Vallès (ES)**
　• **Royal Melbourne Institute Of Technology
　　Melbourne, Victoria 3000 (AU)**

(72) Inventors:
　• **Bemani Lirgeshas, Milad
　　08242 Manresa (ES)**

　• **Casellas Padró, Daniel
　　08242 Manresa (ES)**
　• **Grané Vilaseca, Marc
　　08660 Balsareny (ES)**
　• **Parareda Oriol, Sergi
　　08500 Vic (ES)**
　• **Frómeta Gutiérrez, David
　　43882 Calafell (ES)**
　• **Das, Rajarshi
　　Melbourne, Victoria 3000 (AU)**
　• **Molotnikov, Andrey
　　Melbourne, Victoria 3000 (AU)**
　• **Mateo García, Antonio Manuel
　　08034 Barcelona (ES)**

(74) Representative: **Curell Suñol S.L.P.
　　Muntaner 240, 4o 2a
　　08021 Barcelona (ES)**

(54)　**METHOD TO ADJUST A PROCESSING PARAMETER OF AN ADDITIVE MANUFACTURING PROCESS FOR CONTROLLING THE POROSITY OF A METALLIC PART**

(57)　Method to adjust a processing parameter of an additive manufacturing process for controlling the porosity of a metallic part manufactured with said process, wherein the processing parameter has an effect on the porosity of the metallic part. The method comprises the steps of manufacturing at least one metallic part with the additive manufacturing process; applying at least two electric terminals to the manufactured metallic part and measuring the electric resistance between the two electric terminals; and adjusting the processing parameter in the additive manufacturing process in function of the measured electric resistance for additive manufacturing a metallic part with a controlled porosity.

MANUFACTURING AT LEAST ONE METALLIC PART WITH AN ADDITIVE MANUFACTURING PROCESS, WHEREIN A PROCESSING PARAMETER OF THE ADDITIVE MANUFACTURING PROCESS HAS AN EFFECT ON THE POROSITY OF THE METALLIC PART

↓

APPLYING AT LEAST TWO ELECTRIC TERMINALS TO THE MANUFACTURED METALLIC PART AND MEASURING THE ELECTRIC RESISTANCE BETWEEN THE ELECTRIC TERMINALS

↓

ADJUSTING THE PROCESSING PARAMETER IN THE ADDITIVE MANUFACTURING PROCESS IN FUNCTION OF THE MEASURED ELECTRIC RESISTANCE, FOR ADDITIVE MANUFACTURING A METALLIC PART WITH A CONTROLLED POROSITY

FIG. 8

EP 4 786 075 A1

Processed by Luminess, 75001 PARIS (FR)

**Description**

Field of the invention

The invention refers to the field of manufacturing objects by means of additive manufacturing processes, generally known as 3D printing.

More specifically, the invention refers to a method to adjust a processing parameter of an additive manufacturing process for controlling the porosity of a metallic part manufactured with said additive manufacturing process, wherein said processing parameter has an effect on the porosity of said metallic part.

Prior art

Although in some applications there is an interest in obtaining an additive manufacturing (AM) part with high porosity, generally a high porosity in an AM part is considered a defect, since it alters the physical properties and lowers the dynamic and static mechanical properties of the part.

It is well known that processing parameters in an additive manufacturing process can significantly affect the size, type, and distribution of the pores inside and on the AM part obtained by such process. The effect of varying processing parameters on the quality of the AM parts has been investigated in the literature. Specificity, for the laser powder bed fusion (PBF-LB/M) method, Aboulkhair et al. [1] studied the effects of hatch distance in the range of 50 to 100 $\mu$m on AlSi10Mg parts. Their works showed that the larger overlap of smaller hatch spacing was found to cause slower cooling, leading to a smoother and more homogenous layer of the AM process and reducing the porosity of the part. Qiu et al. [2] used porosity area fraction to study porosity in Ti-6Al-4V specimens produced by PBF-LB/M, and concluded that pores can be studied as a function of scanning speed and increase with an increasing scanning speed between 2,000 and 4,500 mm/s. Sun et al. [3] studied the porosity in PBF-LB/M SS316L parts using high scanning speeds and maintaining low porosities, and found that high-density parts can still be produced using proper scanning strategies and parameters. High laser input power, small hatch spacing, and a bidirectional scanning strategy were shown to decrease porosity percentage.

Several methods have been applied to measure the porosity of AM parts with the aim of studying the effect of variating processing parameters in additive manufacturing processes. Kumar [4] used optical microscopy (OM) images to visually study the porosity percentage in Inconel 718 specimens. Du Plessis [5] employed X-ray tomography of printed Ti6Al4V specimens by PBF-LB/M to investigate the size, geometry, distribution, and percentage of generated pores. Liu [6] used the Archimedes method to evaluate the effect of laser processing parameters on the porosity level of porous Mg-Ca alloys produced by laser additive manufacturing. These methods are applied on manufactured AM parts, after having completed the manufacturing of the part.

On the other hand, some methods are known to monitor in real time an AM part under build during an additive manufacturing process, in which physical properties of the AM part, including the porosity, are measured. WO2016198885A1 discloses a method in which an acoustic sensing system is used to detect acoustic signals generated in the build enclosure by consolidation of the material under the laser radiation, allowing to detect defects within the AM part under build, including layer delamination, micro-cracks and excessive porosity. EP4464439A1 discloses a method for inspecting an AM part under build during an additive manufacturing process, in which in situ height mapping and in situ Planck thermometry are used to estimate subsurface porosity and metallurgical defects. These methods require expensive and sophisticated equipment as well as specialized know-how, and considerably complicate the operation of manufacturing AM parts.

Description of the invention

The purpose of this invention is to provide a method to adjust a processing parameter of an additive manufacturing process for controlling the porosity or a metallic part manufactured with said process, wherein said processing parameter has an effect on the porosity of said metallic part, which is inexpensive, fast and can be easily used by a non-skilled technician. The additive manufacturing process is executed by an additive manufacturing machine or 3D printing machine.

This is achieved by means of a method of the type indicated above, characterized in that it comprises the steps of:

[a] manufacturing at least one metallic part with said additive manufacturing process;
[b] applying at least two electric terminals to said metallic part manufactured in step [a], and measuring the electric resistance between said electric terminals;
[c] adjusting said processing parameter in said additive manufacturing process in function of said electric resistance measured in step [b], for additive manufacturing a metallic part with a controlled porosity.

The method according to the invention only requires the use of an ohmmeter and two electric terminals that are applied on the AM part. Compared to the known methods discussed above, the method according to the invention has the following advantages: it is non-destructive, it does not require a skilled technician, it can be executed very fast and with little preparation, it can be applied to parts of any shape, and it can be implemented with cheap and easily available equipment.

It is well known that the presence of cracks and pores in a metallic part increases the electric resistance in said part, due to the significantly lower conductivity of the air or other gas that fills the cracks or pores, compared to that of the metallic material. This relationship between porosity and electric resistance in metallic parts is the basis of some research methods in the field of materials fatigue, such as the potential drop method (PDM). In these known methods, the initiation and propagation of small cracks are monitored by applying a constant current and by measuring the electric resistance. The method according to the invention is also based on the known relationship between porosity and electric resistance in a metal part, but with the aim of adjusting a processing parameter in an additive manufacturing process. This is achieved in a particularly simple manner, by measuring the electric resistance of the AM part and adjusting the processing parameter on the basis of this measure.

Table 1 compares the method according to the invention with known methods used for porosity measurement to evaluate the effect of processing parameters on the porosity of an AM part. The methods are compared in terms of time, cost, availability, etc. The method according to the invention is indicated in the first column as "ER" (for "Electric Resistance" method). The ER method is fast, cheap, and accurate in determining the best set of processing parameters for AM parts. Specimens of a small AM part can be printed by altering one processing parameter affecting the porosity, while keeping the rest of the processing parameters the same.

*Table 1: comparison between the method according to the invention and known methods (ER: method according to the invention; XRT: X-Ray Tomography; OM: optical microscopy)*

| Features | Methods | | | |
|---|---|---|---|---|
| | ER | XRT | Archimedes | OM imaging |
| Non-destructive | Yes | Yes | Yes | No |
| Requiring a skilled technician | No | Yes | Yes | Yes |
| Time of the test | Very fast | Slow | Fast | Slow |
| Geometry limitation | No | Yes (based on the capacity of the XRT device) | Yes (based on the capacity of the device) | Yes (0M specimens should be prepared) |
| Material limitation | Conductive material | Yes | No | No |
| Cost of the test | Cheap | Expensive | Cheap | Cheap |
| Availability of the required equipment | Easily available | Hard to find | Easily available | Easily available |

The method according to the invention can be applied to adjust any processing parameter influencing the porosity of an AM metallic part, in a variety of additive manufacturing processes.

The method according to the invention is advantageously applied to additive manufacturing processes in which a layer of metallic material is melted and fused by the action of a radiation beam selectively applied on said layer, as discussed below. However, it can also be applied to other additive manufacturing processes in which no radiation beam is used. For instance, it can be applied to a binder jetting process for additive manufacturing metallic parts, in which a liquid binder is selectively applied to join powder metallic particles layer by layer. In this process, a thin layer of metal powder is spread across a build platform, and printheads deposit droplets of a liquid binder onto the powder layer, binding the powder metallic particles together in the desired shape. The build platform lowers, and another layer of metal powder is spread. The process repeats until the part is fully formed. The printed part, known as a "green part," is submitted to post-processing steps such as sintering and infiltration. The processing parameter that is being adjusted by measuring the electric resistance of the AM part, according to the invention, can be any processing parameter influencing the porosity of the finished AM part, including: binder saturation (the relative amount of binder applied to the powder layer), powder layer thickness, powder particle size and distribution, binder viscosity, printheads speed (the speed at which the printheads move over the powder layer to deposit the binder), and post-processing conditions applied to the "green part".

In preferred embodiments, the additive manufacturing processes is a process in which a layer of metallic material is melted and fused by the action of a radiation beam selectively applied on said layer. Preferably, the processing parameter that is being adjusted by measuring the electric resistance of the AM part is directly related to volumetric energy density, so that a variation of said processing parameter implies a variation of volumetric energy density. Volumetric energy density is defined as the amount of energy applied by the radiation beam in the layer per unit volume of metallic material receiving said radiation beam.

As will be seen below in the detailed description of the embodiments, when the processing parameter that is being optimized is directly related to volumetric energy density there is a strong relationship between the measured electric resistance and said processing parameter, which allows adjusting this parameter in a reliable manner. A processing parameter can influence the porosity in a particular way, not only because its contribution to volumetric energy density. For instance, as discussed above, it is known that the larger overlap of smaller hatch spacing causes slower cooling, leading to a smoother and more homogenous layer of the AM process and reducing the porosity of the part. However, volumetric energy density, as a global parameter, strongly influences the porosity.

In preferred embodiments, the processing parameter is one or a combination of the parameters comprised in the group consisting of radiation beam power, radiation beam scanning speed, hatch distance and layer thickness; wherein:

radiation beam power is the amount of energy delivered by the radiation beam per unit of time;
radiation beam scanning speed is the speed at which the radiation beam moves across the layer of metallic material;
hatch distance is the distance between adjacent scan lines that the radiation beam follows as it moves across the layer of metallic material; and
layer thickness is the thickness of the layer of metallic material.

These processing parameters are the main processing parameters on which volumetric energy density depends.

In some preferred embodiments, the processing parameter is radiation beam power. In other preferred embodiments, the processing parameter is radiation beam scanning speed. Beam radiation power or beam radiation scanning speed (or, in more particular embodiments, laser power or laser scanning speed), are two processing parameters easy to variate in an additive manufacturing process by a non-skilled person.

The radiation beam can be, for instance, an electron radiation beam or a laser beam. The additive manufacturing process can be, for instance, an electron beam melting (PBF-EB/M) process or a laser power bed fusion (PBF-LB/M) process. Preferably, the metallic material in the layer is a metallic powder. In preferred embodiments, the radiation beam is a laser beam and the additive manufacturing process is a laser power bed fusion (PBF-LB/M) process.

In possible embodiments of the invention, adjusting the processing parameter in the additive manufacturing process can be done by analyzing the electric resistance measured in a printed part with respect to a known relationship between electric resistance and porosity, in order to obtain a desired level of porosity. However, in preferred embodiments the method according to the invention relies on analyzing a variation of electric resistance measured in different specimens of a metallic part manufactured with different values of the processing parameter. More precisely, in preferred embodiments, in step [a] several specimens of the metallic part are manufactured with the additive manufacturing process, each of said specimens being manufactured with a different value of the processing parameter; and in step [b] the two electric terminals are applied to each of said specimens and the electric resistance between said two electric terminals is measured for each of said specimens. The method comprises analyzing a variation of the measured electric resistance with respect to the processing parameter and determining from said variation an optimum value of the processing parameter; and wherein in step [c], said optimum value is used to adjust the processing parameter in the additive manufacturing process.

Since, in these embodiments, adjusting the processing parameter relies on analyzing the variation of the measured electric resistance, there is no need to know the relationship between porosity and electric resistance. The method can be applied with no need of preliminary experimental work and without having to obtain experimental values of porosity.

The method according to the invention only requires the use of two electric terminals that are applied on the AM part, an ohmmeter and means for analyzing or plotting the variation of the measured electric resistance with respect to the processing parameter.

Preferably, the optimum value of the processing parameter is determined in function of the slope of a curve that represents the measured electric resistance as a function of the processing parameter, and wherein the optimum value is determined as a transitional value between a first zone of said curve in which the pattern of the curve is so that the slope of said curve is constantly decreasing in direction of said transitional value and a second zone following said first zone, wherein the pattern of said curve in said second zone is so that:

- said curve is flat, or
- the slope of said curve changes sign and said transitional value is a minimum value of said processing parameter in said first and second zones.

As will be seen below in the detailed description of the embodiments, this solution makes it possible to determine the optimum value in a particularly easy way.

In some preferred embodiments, the metallic part manufactured with the additive manufacturing process is made of steel.

In other preferred embodiments, the metallic part manufactured with the additive manufacturing process is made of titanium alloy.

Although the method according to the invention can be applied to metallic parts of any shape, simple geometries are preferred since these parts are manufactured for the adjusting process only. Preferably, the metallic part is a rectangular parallelepiped.

In preferred embodiments, the metallic part is an oblong body having a maximum length in a longitudinal direction, and the two electric terminals are applied on opposite ends of said oblong body in said longitudinal direction. Preferably, the length of the oblong body in the longitudinal direction is comprised between 5 mm and 30 mm. This allows a fast printing of the metallic part and ensures a reliable measure of electric resistance in relation to the porosity.

The invention also comprises other features concerning details illustrated in the detailed description of embodiments of the invention and in the attached drawings.

Brief description of the Figures

The advantages and features of the invention can be seen from the following description in which, with a non-limiting character with respect to the scope of the main claim, preferred embodiments of the method according to the invention are described in reference to the Figures.

Figures 1a, 1b and 1c respectively show a plot of electric resistance with respect to laser power for test 1a (SS316L stainless steel), test 1b (C300 maraging steel) and test 1c (Ti6Al4V titanium alloy).

Fig. 2 shows a plot of both electric resistance and porosity with respect to laser power for test 1a.

Fig. 3 shows a plot of electric resistance with respect to laser scanning speed for test 2. The material is C300 maraging steel.

Fig. 4 shows a plot of both electric resistance and porosity with respect to laser scanning speed for test 2.

Fig. 5 shows a plot of electric resistance with respect to laser power for two different geometries.

Figure 6 shows optical microscopy images of different specimens of the part made of SS316L stain steel in test 1a, printed with different values of laser power.

Figure 7 shows optical microscopy images of different specimens of the part made of C300 maraging steel in test 2, printed with different values of laser scanning speed.

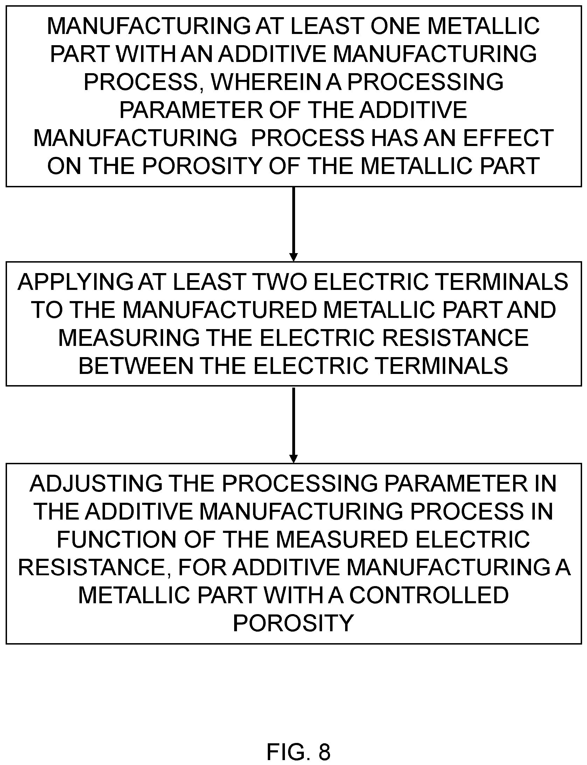

Figure 8 shows a block diagram of the method according to claim 1.

Detailed description of embodiments of the invention

In all the tests described below, the method according to the invention has been put into practice using a 3D printer of the brand SAMYLABS, model ALBA 300. The additive manufacturing process carried out by the 3D printer is a laser power bed fusion (PBF-LB/M) process. The printing process is well known and is basically as follows. A STL file, defining a 3D model of the part or set of parts to be printed, is created by the user. The STL file is loaded into a slicing software associated with the 3D printer, which divides the 3D model into thin horizontal layers, each layer being a 2D cross-section of the model, and sets processing parameters for the 3D printer. The slicing software allows the user to adjust processing parameters, including laser power, laser scanning speed, hatch distance and layer thickness. The slicing software converts the layered model into G-code, which contains instructions for the 3D printer. The 3D printer reads the G-code and prints the part layer by layer. During the printing process, a building platform lowers to create a gap corresponding to the layer thickness. This gap is homogeneously covered by a metallic powder provided by a dispensing system. A laser beam is selectively directed to the layer to melt and weld selected areas of the metallic power in the layer. The layer of metallic powder is maintained in a controlled atmosphere of argon, to avoid the presence of oxygen during melting and welding. The process is repeated for each layer defined in the G-code. When the printing process is finished, the printed part remains submerged in a pool of metallic powder. To deliver the printed part, the building platform rises to make the printed part emerge from the pool. The excess of metallic powder is evacuated for later reuse and the part can be extracted from the building platform.

In the following description, the laser power is the amount of energy delivered by the laser beam per unit of time; the laser scanning speed is the speed at which the laser beam moves across a layer of metallic powder; the hatch distance is the distance between adjacent scan lines that the laser beam follows as it moves across said layer of metallic powder; and the layer thickness is the thickness of said layer of metallic powder.

In the tests described below, the metallic parts manufactured by the 3D printer are made of SS316L stainless steel, C300 maraging steel, and Ti6Al4V titanium alloy. However, the method according to the invention can be applied to manufacture parts made of any other metallic material suitable for additive manufacturing like, for instance, other steels, other titanium alloys, nickel-chromium-based alloys, cobalt-chrome-based allows, etc. On the other hand, the method according to the invention can be applied to additive manufacturing processes other than PBF-LB/M like, for instance, Electron Beam Melting (PBF-EB/M) or Direct Energy Deposition (DED).

Several tests have been carried out by printing metallic parts with the above-described 3D printer. Four processing parameters of the additive manufacturing process executed by the 3D printer are considered: radiation beam power, radiation beam scanning speed, hatch distance and layer thickness. In the embodiments described herein, in which the additive manufacturing process is PBF-LB/M, radiation beam power is laser power and radiation beam scanning speed is laser scanning speed. These are the main processing parameters on which volumetric energy density depends. Volumetric energy density can be estimated by formula (1):

$$ ED = \frac{P}{v \times h \times t} \qquad (1) $$

Where $ED$ is the volumetric energy density (J/mm$^3$), $P$ is the laser power (W), $v$ is the laser scanning speed (mm/s), $h$ is the hatch distance (mm), and $t$ is the layer thickness (mm).

Volumetric energy density can also be considered a global processing parameter of the additive manufacturing process executed by the 3D printer. Volumetric energy density, as well as each of the four processing parameters on which it depends according to formula (1), has an effect on the porosity of the metallic part printed by the 3D printer.

For each test, one processing parameter, named target parameter, is adjusted by the method. The rest of processing parameters remain constant. Several specimens of a metallic part are printed with the 3D printer, each of said specimens being printed with a different value of the target parameter. Two electric terminals are applied to each printed specimen of the metallic part, and the electric resistance between the two electric terminals is measured. The target parameter is adjusted in the additive manufacturing process executed by the 3D printer in function of the electric resistance measured in the specimen between the two electric terminals. Preferably, in the embodiments described herein, the method comprises analyzing a variation of the electric resistance measured in the specimens between the two electric terminals, with respect to the target parameter, determining from this variation an optimum value of the target parameter, and using this optimum value to adjust the target parameter in the additive manufacturing process executed by the 3D printer.

Tests 1a, 1b and 1c

The target parameter is laser power.

Three materials are tested: SS316L stainless steel (test 1a), C300 maraging steel (test 1b) and Ti6Al4V titanium alloy (test 1c).

Test 1a

The processing conditions are described in Table 2a.

Table 2a: Processing conditions for test 1a.

| Laser power (W) | Laser scanning speed (mm/s) | Hatch distance (mm) | Layer thickness (mm) | Material of the metallic part | Shape and dimensions of the metallic part |
|---|---|---|---|---|---|
| 50 75 100 125 150 175 200 225 | 800 | 0.11 | 0.05 | SS316L stainless steel | rectangular parallelepiped length: 20 mm height: 10 mm width: 7 mm |

The metallic part is a rectangular parallelepiped with a length of 20 mm, a height of 10 mm and a width of 7 mm. The metallic part is therefore an oblong body in the length direction.

The two electric terminals are applied on opposite ends of the rectangular parallelepiped in the length direction. More precisely, each electric terminal is an alligator clamp, also known as alligator clip or crocodile clip. It is composed of two spring-loaded serrated jaws. The electric terminals are applied on each printed specimen of the metallic part in the same exact position to avoid variations of the measured electric resistance due to variations of the position of the electric terminals. With this aim, for each specimen the two serrated jaws of each alligator clamp are positioned in contact with the full length of two opposite edges in opposite faces of the parallelepiped in the length direction, and so that each of said edges is located between the same two teeth of the serrated jaw. The alligator clamps are connected to the terminals of an ohmmeter to measure electric resistance of the specimen between them. Other kinds of electric terminals can be used, provided that they are always positioned in the same position in the printed specimens of the metallic part.

The laser speed, the hatch distance and the layer thickness are kept constant, whereas the laser power is varied for each specimen. Different specimens of the metallic part are printed with the different values of the laser power as indicated in Table 2a.

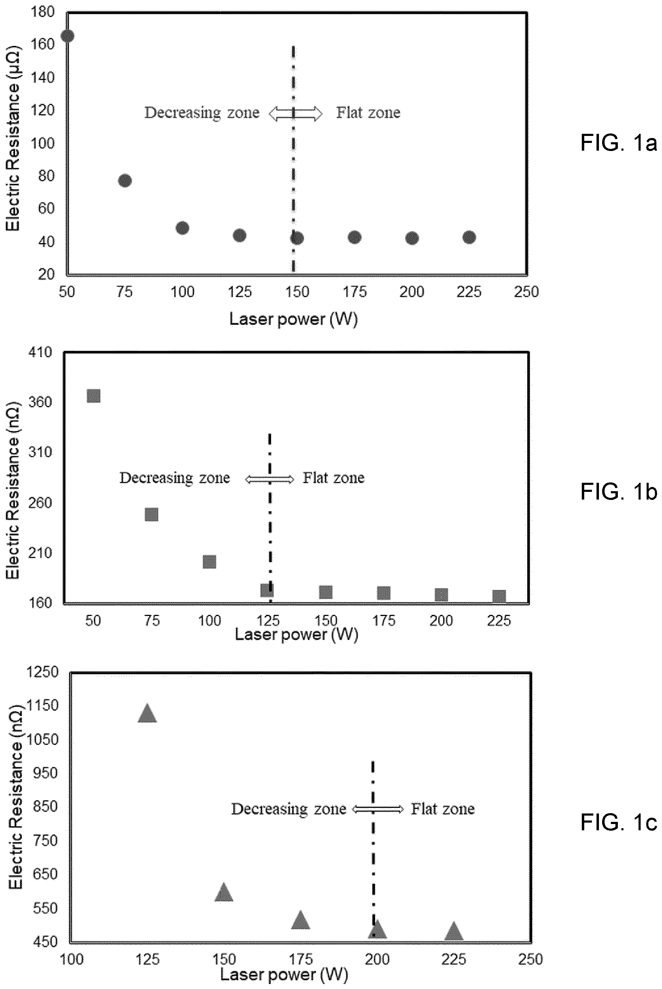

An optimum value of the laser power is determined by analyzing the variation of the electric resistance measured in the specimens between the two electric terminals, with respect to the laser power. Fig. 1a shows a plot of a curve that represents the measured electric resistance as a function of the laser power. As can be seen in Fig. 1a, a transitional value of the laser power divides the curve into two distinct zones: a fist zone ("decreasing zone") in which the slope of the curve is constantly decreasing in direction of the transitional value, and a second ("flat zone") in which the curve is essentially flat. The transitional value of the laser power according to Fig. 1a is 150 W. This is the optimal value of laser power.

The practical outcome of the method is that, for printing parts made of SS316L stainless steel with this 3D printer, the laser power is adjusted to the optimal value of 150 W (the other processing parameters having the values indicated in table 1a). It must be noted that in this embodiment of the method the adjustment of the laser power is simply made by measuring the electric resistance of different specimens of a model part printed by the 3D printer with different values of laser power, without need of measuring the porosity with complicated or time-consuming methods, and without need of knowing the relationship between porosity and electric resistance for the material of the parts being printed.

With the purpose of verifying the accuracy of the method, the porosity of the specimens has been obtained by measuring the relative density with optical microscopy images. Table 3 shows the relative density and the electric resistance measured for the different specimens printed with different values of laser power.

Table 3. Relative density and electric resistance measured in test 1a.

| Laser power (W) | Electric resistance (n$\Omega$) | Relative density (%) |
|---|---|---|
| 25 | 482.4 $\pm$ 32.6 | $\leq$ 40 |
| 50 | 165.8 $\pm$ 21.7 | 52.97 $\pm$ 10.14 |
| 75 | 77.45 $\pm$ 2.6 | 75.95 $\pm$ 0.61 |
| 100 | 48.75 $\pm$ 0.3 | 92.4 $\pm$ 0.28 |
| 125 | 44.45 $\pm$ 0.3 | 98.77 $\pm$ 0.27 |
| 150 | 42.45 $\pm$ 0.3 | 99.91 $\pm$ 0.01 |
| 175 | 43.3 $\pm$ 0.6 | 99.85 $\pm$ 0.03 |

(continued)

| Laser power (W) | Electric resistance (nΩ) | Relative density (%) |
|---|---|---|
| 200 | 42.5 ± 0.3 | 99.92 ± 0.04 |
| 225 | 43.05 ± 0.2 | 99.89 ± 0.03 |

From an optical microscopy image of a cross-section, the total area of the pores is calculated and divided by the total area of the image, which gives the porosity percentage for that cross-section. By obtaining 5 cross-sectional images of a sample and averaging the results for porosity, the porosity percentage of the mentioned specimen is estimated.
The density of each specimen is derived from the formula (2):

$$Relative\ density = 100 - Porosity \qquad\qquad (2)$$

where both porosity and relative density are expressed in percentage.

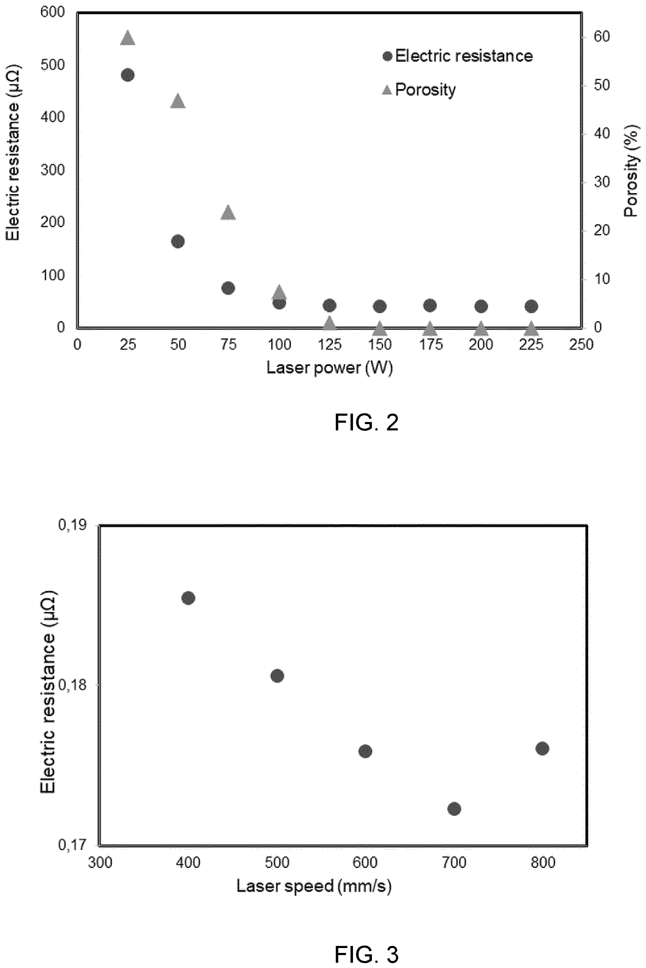

Fig. 2 shows a plot of both the measured electric resistance and the measured porosity in function of the laser power. As can be seen in this figure, the curves of porosity and electric resistance with respect to laser power are similar, so that the same transitional value of 150 W separates the curve of porosity into a fist zone ("decreasing zone") in which the slope of the curve is constantly decreasing in direction of the transitional value, and a second ("flat zone") in which the curve is essentially flat. This transitional value of 150 W is the optimum value of the laser power for printing a part with minimum porosity. Increasing the laser power over 150 W has no benefit since the porosity is not reduced.

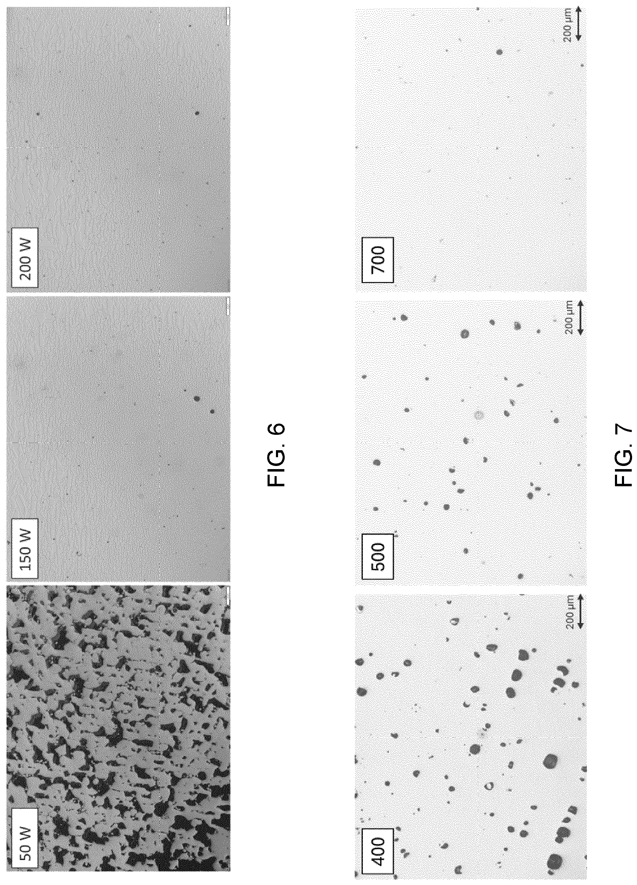

Figure 6 shows optical microscopy images of three specimens of the part in test 1a, printed with values of laser power of 50 W, 150 W and 200 W. The dark areas in the images are void areas. This figure confirms that the porosity of the specimen decreases when the laser power increases, the porosity is minimal for a laser power of 150 W and does not vary significantly when the laser power is further increased.

Test 1b

The processing conditions are described in Table 2b. They are the same as for test 1a, except that the material of the metallic part is C300 maraging steel, and the laser speed is fixed to 700 mm/s.

*Table 2b: Processing conditions for test 1b.*

| Laser power (W) | Laser scanning speed (mm/s) | Hatch distance (mm) | Layer thickness (mm) | Material of the metallic part | Shape and dimensions of the metallic part |
|---|---|---|---|---|---|
| 50<br>75<br>100<br>125<br>150<br>175<br>200<br>225 | 700 | 0.11 | 0.05 | C300 maraging steel | rectangular parallele-piped<br>length: 20 mm<br>height: 10 mm<br>width: 7 mm |

The method applied is the same as for test 1a.
Fig. 1b shows a plot of a curve that represents the measured electric resistance as a function of the laser power. As can be seen in Fig. 1b, as for test 1a, a transitional value of the laser power divides the curve into two distinct zones: a fist zone ("decreasing zone") in which the slope of the curve is constantly decreasing in direction of the transitional value, and a second ("flat zone") in which the curve is essentially flat. The transitional value of the laser power according to Fig. 1b is 125 W. This is the optimal value of laser power. The practical outcome of the method is that, for printing parts made of C300 maraging steel with this 3D printer, the laser power is adjusted to the optimal value of 125 W (the other processing parameters having the values indicated in table 2a).

Test 1c

The processing conditions are described in Table 2c. The material of the metallic part is Ti6Al4V titanium alloy, and the range of laser power is different.

*Table 2c: Processing conditions for test 1c.*

| Laser power (W) | Laser scanning speed (mm/s) | Hatch distance (mm) | Layer thickness (mm) | Material of the metallic part | Shape and dimensions of the metallic part |
|---|---|---|---|---|---|
| 125 150 175 200 225 | 1050 | 0.11 | 0.03 | Ti6Al4V titanium alloy | rectangular parallele-piped length: 20 mm height: 7 mm width: 7 mm |

The method is the same as described for tests 1a and 1b.

Fig. 1c shows a plot of a curve that represents the measured electric resistance as a function of the laser power. As can be seen in Fig. 1c, as for tests 1a and 1b, a transitional value of the laser power divides the curve into two distinct zones: a fist zone ("decreasing zone") in which the slope of the curve is constantly decreasing in direction of the transitional value, and a second ("flat zone") in which the curve is essentially flat. The transitional value of the laser power according to Fig. 2c is 200 W. This is the optimal value of laser power. The practical outcome of the method is that, for printing parts made of Ti6Al4V titanium alloy with this 3D printer, the laser power is adjusted to the optimal value of 200 W (the other processing parameters having the values indicated in table 2c).

Test 2

The target parameter is laser scanning speed.

The processing conditions are described in Table 3. The material tested is C300 maraging steel. The shape and dimensions of the metallic part are the same as for tests 1a, 1b and 1c.

*Table 3: Processing conditions for test 2.*

| Laser power (W) | Laser scanning speed (mm/s) | Hatch distance (mm) | Layer thickness (mm) | Material of the metallic part | Shape and dimensions of the metallic part |
|---|---|---|---|---|---|
| 150 | 400 500 600 700 800 | 0.11 | 0.05 | C300 maraging steel | rectangular parallele-piped length: 20 mm height: 10 mm width: 7 mm |

The method is the same as indicated for tests 1a, 1b, 1c, expect that the target parameter which is varied to print different specimens of the metallic part is laser scanning speed, the other processing parameters being constant. The shape of the curve of electric resistance with respect to the target parameter, and the way of determining the optimum value are also different.

Fig. 3 shows a plot of a curve that represents the measured electric resistance as a function of the laser scanning speed. As can be seen in Fig. 3, a transitional value of the laser power divides the curve into two distinct zones: a first zone in which the slope of the curve is constantly decreasing in direction of the transitional value, and a second zone in which the slope of the curve changes sign. The transitional value is a minimum value of the target parameter in the first and second zones. The transitional value of the laser scanning speed according to Fig. 3 is 700 mm/s. This is the optimal value of laser scanning speed. The practical outcome of the method is that, for printing parts made of C300 maraging steel with this 3D printer, the laser scanning speed is adjusted to the optimal value of 700 mm/s (the other processing parameters having the values indicated in table 3).

As for test 1a, with the purpose of verifying the accuracy of the method, the porosity of the specimens has been measured by measuring the relative density with optical microscopy imaging. Table 4 shows the relative density measured, together with the electric resistance, for the specimens printed with different values of laser scanning speed.

*Table 4. Relative density and electric resistance measured in test 2.*

| Laser scanning speed (mm/s) | Electric resistance ($\mu\Omega$) | Relative density (%) |
|---|---|---|
| 400 | 0.1855 | 98.06 |
| 500 | 0.1806 | 99.29 |
| 600 | 0.1759 | 99.61 |
| 700 | 0.1723 | 99.69 |
| 800 | 0.1761 | 99.46 |

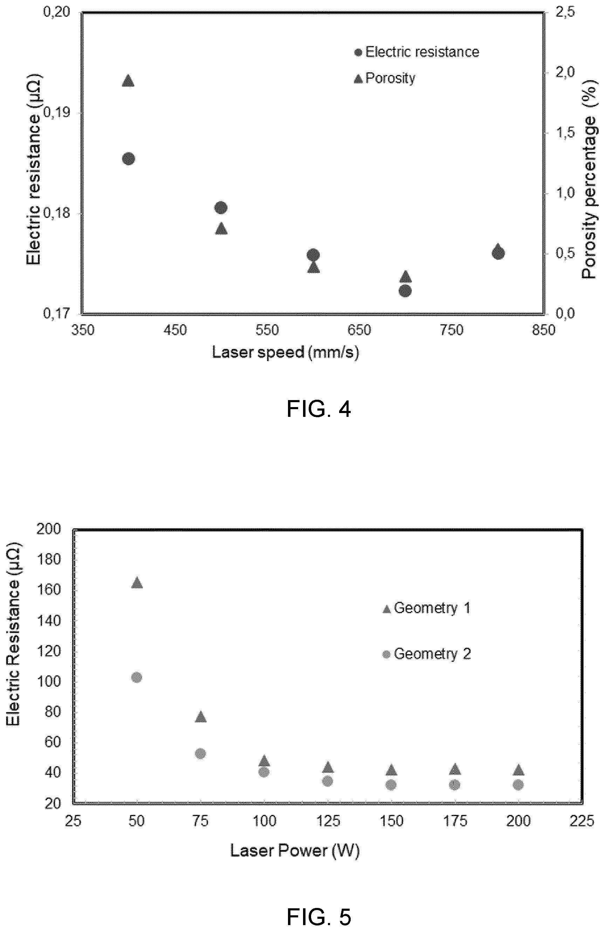

Fig. 4 shows a plot of both the measured electric resistance and the measured porosity in function of the laser scanning speed. As can be seen in this figure, the curves of porosity and resistance with respect to laser scanning speed are similar, so that the same transitional value of 700 mm/s separates the curve of porosity into a first zone ("decreasing zone") in which the slope of the curve is constantly decreasing in direction of the transitional value, and a second in which the slope of the curve changes sign. The transitional value is a minimum value of the target parameter in the first and second zones. This transitional value of 700 mm/s is the optimum value of the laser scanning speed for printing a part with minimum porosity.

Figure 7 shows optical microscopy images of three specimens of the part in test 2, printed with values of laser scanning speed of 400 mm/s, 500 mm/s and 700 mm/s. The dark areas in the images are void areas. This figure confirms that the porosity of the specimen decreases when the laser scanning speed increases, and the porosity is minimal for a laser scanning speed of 700 mm/s.

Test 3

The purpose of test 3 is to show the applicability of the method with other geometries of metallic part. Test 1a is repeated for a second geometry in which the metallic part is double in volume compared to the one described above for test 1a. In this second geometry, the metallic part is a rectangular parallelepiped with a length of 40 mm, a height of 10 mm and a width of 7 mm.

Fig. 5 shows the curve of measured electric resistance as a function of the laser power for the geometries. In the figure, "Geometry" 1 refers to the metallic part described above for test 1a, whereas "Geometry 2" is the metallic part double in volume. As can be seen in the figure, the curve is similar for the two geometries, which makes the method equally applicable to the second geometry.

The method according to the invention can be applied as described above, for a metallic material of the part to be printed, to successively adjust different processing parameters of the additive manufacturing process executed by the 3D printer. Preferably, some of, or preferably all, the following parameters can be adjusted by the method: radiation beam power, radiation beam scanning speed, hatch distance, and layer thickness. This set of adjusted processing parameters is then used for printing, with the same 3D printer, parts of any size and dimension made of the same metallic material.

REFERENCES

[1] N. T. Aboulkhair, N. M. Everitt, I. Ashcroft, and C. Tuck, "Reducing porosity in AlSi10Mg parts processed by selective laser melting," Additive manufacturing, vol. 1, pp. 77-86, 2014.
[2] C. Qiu, C. Panwisawas, M. Ward, H. C. Basoalto, J. W. Brooks, and M. M. Attallah, "On the role of melt flow into the surface structure and porosity development during selective laser melting," Acta Materialia, vol. 96, pp. 72-79, 2015.
[3] Z. Sun, X. Tan, S. B. Tor, and W. Y. Yeong, "Selective laser melting of stainless steel 316L with low porosity and high build rates," Materials & Design, vol. 104, pp. 197-204, 2016.
[4] P. Kumar, J. Farah, J. Akram, C. Teng, J. Ginn, and M. Misra, "Influence of laser processing parameters on porosity in Inconel 718 during additive manufacturing," The International Journal of Advanced Manufacturing Technology, vol. 103, pp. 1497-1507, 2019.
[5] A. du Plessis, "Effects of process parameters on porosity in laser powder bed fusion revealed by X-ray tomography," Additive Manufacturing, vol. 30, p. 100871, 2019.
[6] C. Liu, M. Zhang, and C. Chen, "Effect of laser processing parameters on porosity, microstructure and mechanical properties of porous Mg-Ca alloys produced by laser additive manufacturing," Materials Science and Engineering: A, vol. 703, pp. 359-371, 2017.

**Claims**

1. Method to adjust a processing parameter of an additive manufacturing process for controlling the porosity of a metallic part manufactured with said additive manufacturing process, wherein said processing parameter has an effect on the porosity of said metallic part; **characterized in that** it comprises the steps of:

   [a] manufacturing at least one metallic part with said additive manufacturing process;
   [b] applying at least two electric terminals to said metallic part manufactured in step [a], and measuring the electric resistance between said electric terminals;
   [c] adjusting said processing parameter in said additive manufacturing process in function of said electric resistance measured in step [b], for additive manufacturing a metallic part with a controlled porosity.

2. The method according to claim 1, wherein said additive manufacturing process is a process in which a layer of metallic material is melted and fused by the action of a radiation beam selectively applied on said layer.

3. The method according to claim 2, wherein said processing parameter is directly related to volumetric energy density, so that a variation of said processing parameter implies a variation of volumetric energy density; and wherein volumetric energy density is defined as the amount of energy applied by said radiation beam in said layer per unit volume of said metallic material receiving said radiation beam.

4. The method according to claim 3, wherein said processing parameter is one or a combination of the parameters comprised in the group consisting of radiation beam power, radiation beam scanning speed, hatch distance and layer thickness; wherein:

   radiation beam power is the amount of energy delivered by the radiation beam per unit of time;
   radiation beam scanning speed is the speed at which the radiation beam moves across said layer of metallic material;
   hatch distance is the distance between adjacent scan lines that the radiation beam follows as it moves across said layer of metallic material; and
   layer thickness is the thickness of said layer of metallic material.

5. The method according to claim 4, wherein said processing parameter is radiation beam power.

6. The method according to claim 4, wherein said processing parameter is radiation beam scanning speed.

7. The method according to any one of claims 3 to 6, wherein said metallic material in said layer is a metallic powder.

8. The method according to claim 7, wherein said radiation beam is a laser beam and said additive manufacturing process is a laser power bed fusion (PBF-LB/M) process.

9. The method according to any one of claims 1 to 8, wherein in step [a] several specimens of said metallic part are manufactured with said additive manufacturing process, each of said specimens being manufactured with a different value of said processing parameter; and in step [b] said two electric terminals are applied to each of said specimens and the electric resistance between said two electric terminals is measured for each of said specimens;

   wherein said method comprises analyzing a variation of the measured electric resistance with respect to said processing parameter, and determining from said variation an optimum value of said processing parameter; and wherein in step [c], said optimum value is used to adjust said processing parameter in said additive manufacturing process.

10. The method according to claim 9, wherein said optimum value of said processing parameter is determined in function of the slope of a curve that represents the measured electric resistance as a function of said processing parameter, and wherein said optimum value is determined as a transitional value between a first zone of said curve in which the pattern of the curve is so that the slope of said curve is constantly decreasing in direction of said transitional value and a second zone following said first zone, wherein the pattern of said curve in said second zone is so that:

    - said curve is flat, or
    - the slope of said curve changes sign and said transitional value is a minimum value of said processing parameter in said first and second zones.

11. The method according to any one of claims 1 to 10, wherein the metallic part manufactured with said additive manufacturing process is made of steel.

12. The method according to any one of claims 1 to 10, wherein the metallic part manufactured with said additive manufacturing process is made of titanium alloy.

13. The method according to any one of claims 1 to 12, wherein said metallic part is a rectangular parallelepiped.

14. The method according to any one of claims 1 to 13, wherein said metallic part is an oblong body having a maximum length in a longitudinal direction, and said two electric terminals are applied on opposite ends of said oblong body in said longitudinal direction.

15. The method according to claim 14, wherein the length of said oblong body in said longitudinal direction is comprised between 5 mm and 30 mm.

FIG. 1a

FIG. 1b

FIG. 1c

FIG. 2

FIG. 3

FIG. 4

FIG. 5

FIG. 6

FIG. 7

MANUFACTURING AT LEAST ONE METALLIC PART WITH AN ADDITIVE MANUFACTURING PROCESS, WHEREIN A PROCESSING PARAMETER OF THE ADDITIVE MANUFACTURING PROCESS HAS AN EFFECT ON THE POROSITY OF THE METALLIC PART

APPLYING AT LEAST TWO ELECTRIC TERMINALS TO THE MANUFACTURED METALLIC PART AND MEASURING THE ELECTRIC RESISTANCE BETWEEN THE ELECTRIC TERMINALS

ADJUSTING THE PROCESSING PARAMETER IN THE ADDITIVE MANUFACTURING PROCESS IN FUNCTION OF THE MEASURED ELECTRIC RESISTANCE, FOR ADDITIVE MANUFACTURING A METALLIC PART WITH A CONTROLLED POROSITY

FIG. 8

Europäisches
Patentamt

European
Patent Office

Office européen
des brevets

# EUROPEAN SEARCH REPORT

**Application Number**

EP 25 38 2058

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 245 440 A1 (AMIQUAM SA [CH]) 20 September 2023 (2023-09-20) * paragraph [0058] - paragraph [0060] * * claim 1 * * figure 7 * * figure 8a/b * * paragraph [0032] * * paragraph [0048] - paragraph [0049] * * paragraph [0006] * * paragraph [0047] * * figure 1 * ----- | 1-15 | INV. B22F10/28 B22F10/36 B22F10/38 B29C64/153 B33Y10/00 B33Y50/02 B22F10/366 B22F12/90 G01N27/04 |
| Y | US 10 473 552 B1 (LEATHE NICHOLAS [US] ET AL) 12 November 2019 (2019-11-12) * page 1, line 61 - line 67 * * page 7, line 4 - line 15 * ----- | 1-15 | |
| A | US 2020/406556 A1 (BAKER ANDREW H [US]) 31 December 2020 (2020-12-31) * claims 1-17 * * abstract * ----- | 1-15 | |
| A | US 2018/120260 A1 (GOLDFINE NEIL J [US] ET AL) 3 May 2018 (2018-05-03) * paragraph [0072] - paragraph [0075] * * paragraph [00119] * * abstract * ----- -/-- | 1-15 | TECHNICAL FIELDS SEARCHED (IPC) B22F B29C B33Y G01N |

The present search report has been drawn up for all claims

| Place of search | Date of completion of the search | Examiner |
|---|---|---|
| The Hague | 20 June 2025 | Godino Martinez, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 38 2058

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SPIERINGS ADRIAAN BERNARDUS ET AL: "Direct part density inspection in laser powder bed fusion using eddy current testing", , 23 September 2021 (2021-09-23), pages 1-5, XP055956173, DOI: 10.3929/ethz-b-000516133 Retrieved from the Internet: URL:https://www.research-collection.ethz.c h/bitstream/handle/20.500.11850/516133/Spi erings(2021)-Directpartdensityinspectionin laserpowderbedfusionusingeddycurrenttestin g.pdf?sequence=1&isAllowed=y> * abstract * * figures 2-3 * * conclusions * ----- | 1-15 | |
| A | US 11 858 041 B2 (HEWLETT PACKARD DEVELOPMENT CO [US]) 2 January 2024 (2024-01-02) * claims 1-15 * * abstract * ----- | 1-15 | TECHNICAL FIELDS SEARCHED (IPC) |

The present search report has been drawn up for all claims

| Place of search | Date of completion of the search | Examiner |
|---|---|---|
| The Hague | 20 June 2025 | Godino Martinez, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 38 2058

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2025

| Patent document cited in search report | | Publication date | Patent family member(s) | | Publication date |
|---|---|---|---|---|---|
| EP 4245440 | A1 | 20-09-2023 | EP | 4245440 A1 | 20-09-2023 |
| | | | EP | 4493341 A1 | 22-01-2025 |
| | | | US | 2025196228 A1 | 19-06-2025 |
| | | | WO | 2023175525 A1 | 21-09-2023 |
| US 10473552 | B1 | 12-11-2019 | NONE | | |
| US 2020406556 | A1 | 31-12-2020 | CN | 112149270 A | 29-12-2020 |
| | | | EP | 3757560 A1 | 30-12-2020 |
| | | | US | 2020406556 A1 | 31-12-2020 |
| US 2018120260 | A1 | 03-05-2018 | US | 2018120260 A1 | 03-05-2018 |
| | | | US | 2022178877 A1 | 09-06-2022 |
| | | | US | 2023152278 A1 | 18-05-2023 |
| | | | US | 2023408449 A1 | 21-12-2023 |
| US 11858041 | B2 | 02-01-2024 | US | 2021362241 A1 | 25-11-2021 |
| | | | WO | 2020149830 A1 | 23-07-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016198885 A1

- EP 4464439 A1

**Non-patent literature cited in the description**

- **N. T. ABOULKHAIR** ; **N. M. EVERITT** ; **I. ASHCROFT** ; **C. TUCK**. Reducing porosity in AlSi10Mg parts processed by selective laser melting. *Additive manufacturing*, 2014, vol. 1, 77-86
- **C. QIU** ; **C. PANWISAWAS** ; **M. WARD** ; **H. C. BASOALTO** ; **J. W. BROOKS** ; **M. M. ATTALLAH**. On the role of melt flow into the surface structure and porosity development during selective laser melting. *Acta Materialia*, 2015, vol. 96, 72-79
- **Z. SUN** ; **X. TAN** ; **S. B. TOR** ; **W. Y. YEONG**. Selective laser melting of stainless steel 316L with low porosity and high build rates. *Materials & Design*, 2016, vol. 104, 197-204

- **P. KUMAR** ; **J. FARAH** ; **J. AKRAM** ; **C. TENG** ; **J. GINN** ; **M. MISRA**. Influence of laser processing parameters on porosity in Inconel 718 during additive manufacturing. *The International Journal of Advanced Manufacturing Technology*, 2019, vol. 103, 1497-1507
- **A. DU PLESSIS**. Effects of process parameters on porosity in laser powder bed fusion revealed by X-ray tomography. *Additive Manufacturing*, 2019, vol. 30, 100871
- **C. LIU** ; **M. ZHANG** ; **C. CHEN**. Effect of laser processing parameters on porosity, microstructure and mechanical properties of porous Mg-Ca alloys produced by laser additive manufacturing. *Materials Science and Engineering: A*, 2017, vol. 703, 359-371